(19) Europäisches Patentamt
European Patent Office
Office européen des brevets

(11) **EP 1 998 469 B1**

(12) **FASCICULE DE BREVET EUROPEEN**

(45) Date de publication et mention
de la délivrance du brevet:
**17.02.2010 Bulletin 2010/07**

(51) Int Cl.:
***H04B 7/005*** *(2006.01)*

(21) Numéro de dépôt: **08156908.9**

(22) Date de dépôt: **26.05.2008**

(54) **Terminal radio opportuniste et méthode de recherche de bande correspondant**

Opportunistisches Funkendgerät und entsprechendes Verfahren zur Bandsuche

Opportunistic radio terminal and corresponding method for band searching

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.05.2007 FR 0755396**

(43) Date de publication de la demande:
**03.12.2008 Bulletin 2008/49**

(73) Titulaire: **COMMISSARIAT A L'ENERGIE ATOMIQUE**
**75015 Paris (FR)**

(72) Inventeur: **Jallon, Pierre**
**38100 Grenoble (FR)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
EP-A- 1 750 467        US-A1- 2006 067 354
US-A1- 2006 083 205    US-A1- 2006 084 444

• **CORDEIRO C ET AL: "IEEE 802.22: the first worldwide wireless standard based on cognitive radios" NEW FRONTIERS IN DYNAMIC SPECTRUM ACCESS NETWORKS, 2005. DYSPAN 2005. 2005 FIRST IEEE INTERNATIONAL SYMPOSIUM ON BALTIMORE, MD, USA 8-11 NOV. 2005, PISCATAWAY, NJ, USA, IEEE, 8 novembre 2005 (2005-11-08), pages 328-337, XP010855130 ISBN: 1-4244-0013-9**

**Description**

## DOMAINE TECHNIQUE

La présente invention concerne le domaine de la radio opportuniste, en particulier celui des réseaux WRAN *(Wireless Regional* Area *Networks).*

## ÉTAT DE LA TECHNIQUE ANTÉRIEURE

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB *(Ultra Wide Band).* La seconde consiste à utiliser de manière opportuniste une partie du spectre ponctuellement ou temporairement inoccupée, c'est la voie dite de radio opportuniste (ou *Cognitive Radio).* La seule contrainte pesant sur un système radio opportuniste, dit aussi secondaire, est de ne pas gêner les systèmes radio primaires. On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Le principe de la radio opportuniste a été notamment retenu pour le développement des réseaux sans fil à longue portée encore dénommés WRAN *(Wireless Regional* Area *Network).* Ces réseaux font actuellement l'objet d'un processus de standardisation au sein du groupe de travail de IEEE 802.22. Plus précisément, cette norme en cours d'élaboration propose d'utiliser de manière opportuniste les bandes UHF et VHF vacantes pour réaliser une transmission sans fil point à point dans un réseau WRAN. On trouvera une introduction à la norme IEEE 802.22 dans l'article de C. Cordeiro et al. intitulé « IEEE 802.22 : an introduction to the first wireless standard base on cognitive radios », publié dans Journal of Communications, Vol. 1, N˚1, Avril 2006, pp. 38-47.

Il est notamment prévu dans la norme 802.22 que les bandes UHF allouées au système de télévision à diffusion par voie terrestre DVB-T *(Digital Video Broadcast-Terrestrial)* puissent être utilisées à cette fin. On rappelle que la norme DVB-T fait appel à une modulation OFDM *(Orthogonal Frequency Division Multiplexing*) pour transmettre des flux vidéo/audio compressés.

Il est par conséquent nécessaire qu'un émetteur d'un réseau WRAN puisse déterminer facilement dans quelle bande UHF et avec quelle puissance il peut émettre. Il est actuellement proposé que le terminal radio opportuniste scanne systématiquement les différentes bandes et y mesure l'intensité du champ, à partir de la puissance du signal reçu et des paramètres du récepteur. Un tel terminal de télécommunication opportuniste est divulgué dans EP 1 750 467. Afin de permettre au terminal d'effectuer une mesure dans une bande en cours d'utilisation (in-*band channel)* la station de base doit cesser d'émettre périodiquement, ce qui réduit d'autant le débit tant sur le lien montant que sur le lien descendant.

Le but de la présente invention est de proposer une méthode permettant de déterminer facilement les canaux UHF disponibles pour une transmission opportuniste, sans réduction importante de débit entre le terminal et la station de base.

## EXPOSÉ DE L'INVENTION

La présente invention est définie par un terminal de télécommunication opportuniste destiné à coexister avec un système de télécommunication primaire utilisant un ensemble de bandes de fréquence d'émission, comprenant une pluralité d'émetteurs distribués spatialement, chaque émetteur étant adapté à émettre, dans une pluralité de bandes de fréquence dudit ensemble qui lui sont allouées, à l'intérieur d'une zone de couverture, ledit terminal comprenant :

- des moyens de localisation adaptés à fournir la position dudit terminal avec une précision prédéterminée ;
- une base de données dans laquelle sont stockées pour chaque émetteur sa position, les bandes de fréquence qui lui sont allouées et des informations de couverture définissant sa zone de couverture ;
- des moyens de calcul adaptés à déterminer, pour chacune des bandes de fréquence dudit ensemble, la puissance maximale que le terminal peut y émettre, à partir de ladite position du terminal, ainsi que la position, les bandes de fréquences allouées et la zone de couverture de chaque émetteur, lesdits moyens de calcul étant en outre adaptés à trier les bandes de fréquence en fonction des puissances maximales ainsi obtenues ;
- des moyens d'émission/réception radio adaptés à détecter la présence d'un signal dans les bandes de fréquences ainsi triées, en commençant par la bande de fréquence associée à la puissance maximale la plus élevée.

Avantageusement, les moyens de calcul sont adaptés à déterminer, pour chaque bande de fréquence dudit ensemble, les émetteurs possédant ladite bande parmi leurs bandes de fréquence allouées, puis à déterminer, en fonction des informations de couverture de la base de données, les zones de couverture respectives de ces émetteurs, et à en déduire l'émetteur dont la zone de couverture est la plus proche dudit terminal pour la bande considérée.

Les moyens de calcul sont typiquement adaptés à calculer, à partir d'un modèle de propagation, la puissance maximale que le terminal peut émettre sans que l'intensité du champ généré au point de la zone de couverture le plus proche du terminal n'excède une valeur de seuil prédéterminée.

La présence d'un signal dans lesdites bandes triées peut être simplement détectée par un détecteur de puissance.

Selon un premier mode de réalisation, les moyens de localisation sont un récepteur GPS.

Selon un second mode de réalisation, lesdits moyens de localisation déterminent la position du terminal, avec la précision du diamètre moyen d'une zone de couverture, en fonction de la signature spectrale de l'émetteur le plus proche du terminal.

Si le système de télécommunication primaire émet des signaux OFDM de paramètres temporels prédéterminés dans les bandes de fréquence dudit ensemble, les moyens de localisation sont avantageusement adaptés à déterminer la probabilité de présence d'un signal OFDM dans chacune des dites bandes et à les trier par ordre de probabilité décroissante pour obtenir une liste ordonnée de bandes.

Par exemple, les paramètres temporels peuvent être la durée utile et la longueur de préfixe cyclique d'un symbole OFDM. La probabilité de présence d'un signal OFDM est alors estimée par la fonction de discrimination :

$$J(\alpha,\beta) = \sum_{p=-P}^{P} \left| \frac{1}{U} \sum_{u=0}^{U-1} s(u) s^*(u-\alpha) e^{-2i\pi \frac{p}{\alpha+\beta}} \right|^2$$

où $s(u)$, $u = 0,..,U - 1$ est une séquence d'échantillons du signal reçu par le terminal, obtenu après démodulation en bande de base et échantillonnage, $\alpha$ et $\beta$ sont respectivement la durée utile et la longueur de préfixe de symbole OFDM, exprimées en nombre d'échantillons.

Selon un exemple de réalisation, le système de télécommunication primaire est un système de diffusion DVB-T, six bandes de fréquence sont allouées par émetteur et $P = 3.$

Avantageusement, la position du terminal est donnée par l'émetteur dont toutes les bandes allouées sont les premières à apparaître dans ladite liste ordonnée.

L'invention concerne de manière similaire une méthode de recherche de bande disponible pour un terminal opportuniste tel qu'exposé ci-dessus.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 illustre schématiquement le principe à la base de l'invention ;
La Fig. 2 donne l'organigramme de la méthode de recherche de bande disponible selon un mode de réalisation de l'invention ;
La Fig. 3 représente schématiquement un terminal radio opportuniste selon un mode de réalisation de l'invention ;
La Fig. 4 donne l'organigramme d'un procédé de localisation utilisé dans un mode de réalisation avantageux de l'invention.

**EXPOSÉ DÉTAILLÉ DE MODES DE RÉALISATION PARTICULIERS**

Nous considérons à nouveau un système de télécommunication opportuniste devant coexister avec un système de télécommunication primaire susceptible d'occuper une pluralité de bandes de fréquence, par exemple un système WRAN devant coexister avec un système de diffusion de signaux de télévision DVB-T.

L'idée à la base de l'invention est de déterminer les bandes de fréquences disponibles du système primaire à partir de la position du terminal et d'une base de données donnant les positions des différents émetteurs du système primaire ainsi que leurs couvertures respectives.

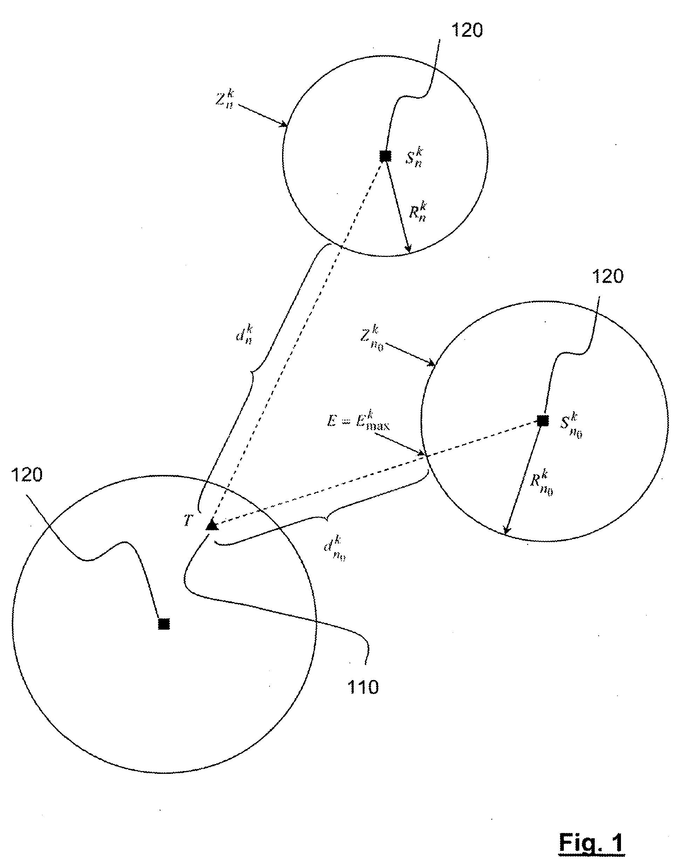

La Fig. 1 illustre la méthode mise en oeuvre dans la présente invention.

Le terminal du système de télécommunication secondaire *T* a été représenté en 110 et les émetteurs du système de télécommunication primaire par 120.

On suppose que le terminal connaît sa propre position, les positions des émetteurs 120 ainsi que les zones de couverture respectives de ces derniers. Les zones de couverture ont été représentées par des disques grisés en Fig. 1. Par zone de couverture d'un émetteur, on entend une zone dans laquelle l'intensité du champ généré par cet émetteur est supérieure à une valeur minimale donnée, typiquement 44 µV/m. Elle est généralement décrite par un ensemble de paramètres géométriques : un rayon de couverture dans le cas simple d'une émission isotrope, ou un rayon de couverture, une direction et une ouverture angulaire de secteur dans le cas d'une émission sectorielle, voire les coordonnées respectives d'un ensemble de points définissant le contour de la zone de couverture.

Enfin, on suppose que le terminal opportuniste connaît les bandes de fréquence respectives allouées aux différents émetteurs 120. On note $\boldsymbol{B}=\{\boldsymbol{B_k}\}_{k=1,..,\boldsymbol{K}}$ la liste de ces bandes de fréquence, où $\boldsymbol{K}$ est le nombre total de bandes de fréquence utilisées par le système primaire.

Pour chaque bande de fréquence $\boldsymbol{B}_k \in \boldsymbol{B}$, le terminal 110 recherche les émetteurs $S_1^k, S_2^k, .., S_{N_k}^k$ auxquels la bande $\boldsymbol{B}_k$ est allouée. Le terminal calcule alors les distances notées $d_1^k, d_2^k, .., d_{N_k}^k$ qui le séparent respectivement des zones de couverture respectives $Z_n^k$ de ces émetteurs. Par exemple, si la couverture d'un émetteur $S_n^k$, $n \in \{1,..,N_k\}$ est définie par son rayon de couverture $R_k^n$ pour la bande $\boldsymbol{B}_k$, la distance $d_n^k$ à la zone de couverture de cet émetteur sera donnée simplement par $D_n - R_k^n$ où $\boldsymbol{D}_n$ est la distance séparant le terminal et l'émetteur $S_n^k$ considéré. Une évaluation de distance plus complexe pourra être effectuée dans le cas d'une zone de couverture sectorielle ou d'un contour de zone échantillonnée, par exemple en recherchant le point de ce contour le plus proche de l'émetteur.

Si la position du terminal est connue avec une marge d'erreur, c'est-à-dire au sein d'une zone d'incertitude, on se placera pour les besoins du calcul précédent dans le pire cas. Plus précisément, on supposera, pour le calcul de la distance $d_n^k$ à un émetteur $S_n^k$ donné, que le terminal se trouve au point de la zone d'incertitude le plus proche de la zone de couverture de $S_n^k$.

Si le terminal se trouve à l'intérieur d'une zone de couverture d'un émetteur donné, les bandes de fréquences allouées à cet émetteur sont d'emblée exclues de la liste des bandes de fréquence $\boldsymbol{B}$. Si le terminal se trouve à l'intérieur de plusieurs zones de couverture de différents émetteurs, l'ensemble des bandes de fréquence allouées à ces émetteurs est exclu de la liste des bandes de fréquence $\boldsymbol{B}$. La liste ainsi réduite sera notée $\boldsymbol{B'}$.

Pour chaque bande de fréquence $\boldsymbol{B}_k$ appartenant à $\boldsymbol{B'}$, le terminal détermine l'émetteur dont la zone de couverture est la plus proche, en d'autres termes, l'émetteur réalisant la plus faible distance $d_n^k$, soit $S_{n_0}^k$ avec

$$n_0 = \operatorname*{Argmin}_n \left( d_n^k \right).$$

Le terminal détermine ensuite, à l'aide d'un modèle de propagation, la puissance maximale avec laquelle il peut émettre, sans perturber la réception dans la zone de couverture la plus proche, c'est-à-dire celle de l'émetteur $S_{n_0}^k$. Le terminal pourra avantageusement utiliser à cette fin un modèle de propagation, par exemple un modèle de propagation conforme à la recommandation de l'ITU P.1546, intitulée « Method for point-to-area predictions for terrestrial services in the frequency range 30 MHz to 3000 MHz », r.2, 08-2005.

Plus précisément, le terminal calcule, grâce à ce modèle, la puissance $P_{\max}^k$ avec laquelle il peut émettre sans que l'intensité de champ maximale au point $\boldsymbol{M}$ appartenant au contour de la zone de couverture de l'émetteur

$S_{n_0}^k$ , le plus proche du terminal, n'excède une valeur de seuil $E_{\max}^k$ . On utilisera par exemple une valeur de 30

$\mu$V/m pour $E_{\max}^k$ .

Dans l'hypothèse où la position du terminal n'est connue qu'avec incertitude, on se placera à nouveau dans le pire cas, c'est-à-dire que l'on prendra en compte le point **M** du contour de la couverture le plus proche de la zone d'incertitude.

Les valeurs de puissance maximale $P_{\max}^k$ sont ensuite triées et le terminal vérifie dans l'ordre des puissances décroissantes si les bandes de fréquence correspondantes sont disponibles. Pour une bande **B**$_k$ donnée de **B'**, le terminal détecte si un signal y est déjà présent, par exemple un signal TV analogique ou un signal d'un autre système opportuniste. Si tel est le cas, le terminal peut émettre avec une puissance inférieure à $P_{\max}^k$ à l'intérieur de cette bande. Ainsi, la recherche de bande disponible est optimisée, puisqu'elle donne la première bande disponible permettant une émission avec la plus forte puissance possible sans perturbation du système de télécommunication primaire.

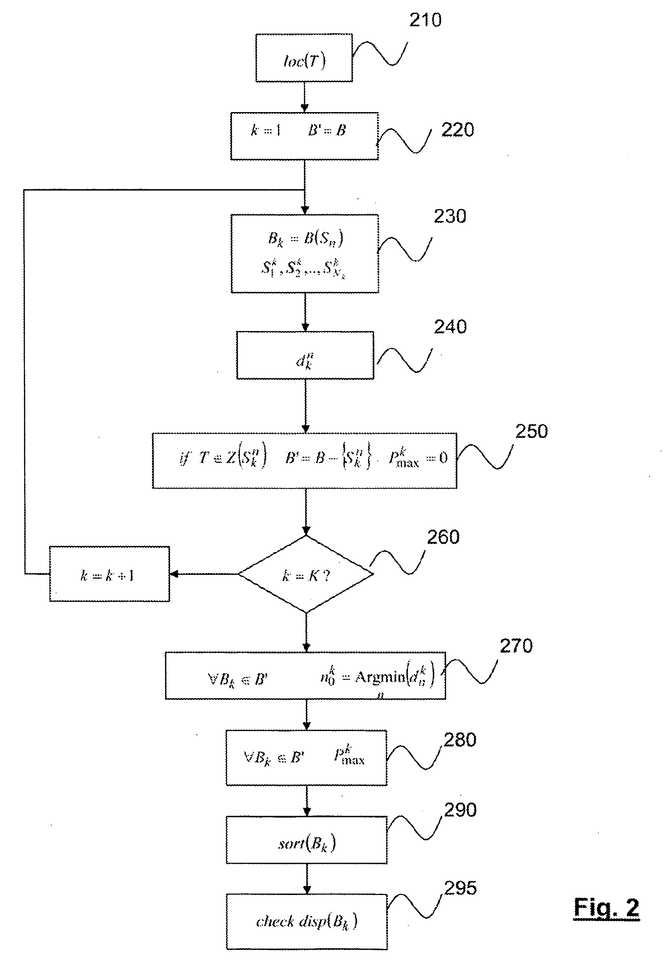

La Fig. 2 donne sous forme d'organigramme la méthode de détermination de bande disponible pour un terminal opportuniste selon l'invention.

A l'étape 210, le terminal **T** obtient ou détermine lui-même sa position, puis entre dans une boucle de recherche itérative, une itération étant effectuée pour chaque bande **B**$_k$ du système de télécommunication primaire.

En 220, on initialise un compteur de bandes à **k = 1** et un ensemble **B'** de bandes disponibles à l'ensemble B des bandes du système de télécommunication primaire.

En 230, on recherche les émetteurs du système primaire $S_1^k, S_2^k, .., S_{N_k}^k$ auxquels la bande **B**$_k$ est allouée, autrement dit les émetteurs **S**$_n$, **n=1,..,N** tels que **B**$_k \in$ **B(S**$_n$**)** où **N** est le nombre d'émetteurs et où **B(.)** est une fonction donnant les bandes allouées d'un émetteur.

En 240, on calcule, pour chaque émetteur $S_n^k$ , **n=1,...,N**$_k$ la distance $d_n^k$ séparant le terminal à la zone de couverture de $S_n^k$ .

En 250, on détermine si le terminal **T** appartient à la zone de couverture d'un émetteur $S_n^k$ et dans l'affirmative, on met à jour l'ensemble **B'** en supprimant les bandes allouées à $S_n^k$ , soit $B' = B' \setminus B\left(S_n^k\right)$. On condamne l'utilisation de bandes supprimées en imposant $P_{\max}^k = 0$ pour ces bandes.

En 260, on teste si le nombre total **K** de bandes est atteint. Si ce n'est pas le cas, on incrémente le compteur de bandes et l'on retourne à l'étape 230. En revanche si toutes les bandes ont été passées en revue, on recherche en 270, pour chaque bande **B**$_k$ de **B'**, l'émetteur $S_{n0}^k$ réalisant la plus faible distance $d_n^k$ , autrement dit celui qui est susceptible d'être le plus perturbé par une transmission du terminal dans la bande **B**$_k$.

En 280, on calcule pour chaque bande de **B'** grâce au modèle de propagation précité la puissance $P_{\max}^k$ avec laquelle le terminal peut émettre sans que l'intensité du champ au point proximal **M** de la zone de couverture n'excède la valeur de seuil prédéterminée $E_{\max}^k$ .

On effectue ensuite, à l'étape 290, un tri des bandes de fréquence **B**$_k$ en fonction des valeurs de puissances maximales $P_{\max}^k$ que le terminal peut émettre dans ces bandes.

En 295, on recherche parmi l'ensemble **B** les bandes disponibles en commençant par celle correspondant à la plus forte puissance $P_{\max}^k$ et en progressant selon les puissances décroissantes.

Selon une variante, pour accélérer le processus de recherche des émetteurs par bande, on peut se limiter dans la boucle d'itération aux bandes $B_k$ telles que $B_k \in B'$. Autrement si une bande est éliminée au cours d'une itération parce qu'elle est allouée à un émetteur dont la zone de couverture inclut le terminal, elle n'est plus prise en compte dans la suite de la recherche.

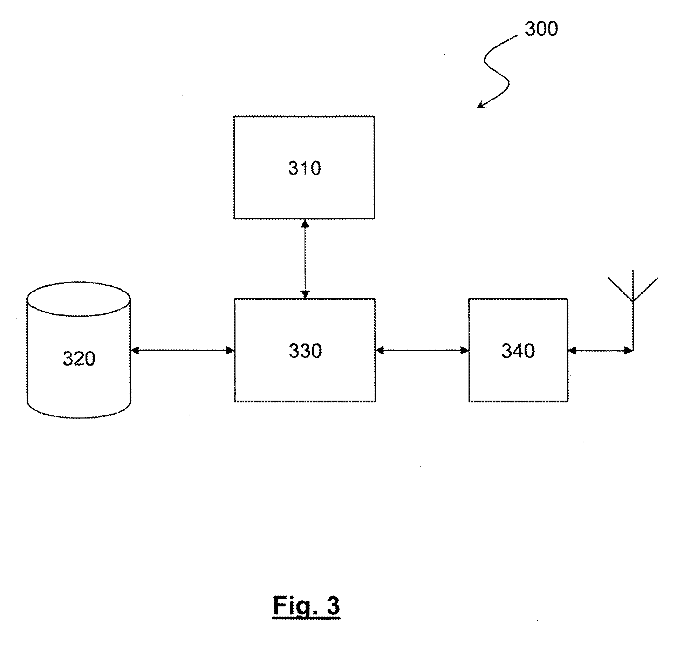

La Fig. 3 illustre de manière schématique un terminal de système radio opportuniste selon l'invention.

Le terminal 300 comprend des moyens de localisation 310 permettant de déterminer au moins approximativement sa position. Par approximativement, on entend par exemple une précision de l'ordre du diamètre d'une cellule du système de télécommunication primaire.

Le terminal comprend également une base de données 320 dans laquelle sont stockées les positions des différents émetteurs du système primaire, les bandes de fréquence qui leur sont allouées et des informations de couverture. Les informations de couverture d'un émetteur permettent de déterminer sa zone de couverture, la description géométrique de la zone de couverture de l'émetteur (voire les zones de couvertures pour les différentes bandes). Le terminal connaît ainsi précisément la carte de déploiement spectral du système primaire.

Les moyens de calcul 330 recherchent ensuite pour chaque bande $B_k$, les émetteurs auxquels cette bande est allouée. Les moyens 330 récupèrent ensuite les informations de couverture correspondantes de ces émetteurs et à partir de la position du terminal calculent les valeurs $P_{\max}^k$ avant de les trier bandes par valeurs décroissantes de $P_{\max}^k$ comme indiqué plus haut.

Les bandes triées selon l'ordre ainsi obtenu sont ensuite transmises au module d'émission/réception opportuniste 340 pour rechercher les bandes disponibles. La disponibilité des bandes peut être testée avec un simple détecteur de puissance.

Les moyens de localisation 310 peuvent être par exemple un récepteur GPS, ou des moyens de triangulation à partir de signaux émis par les stations de base, de manière connue par l'homme du métier.

Lorsque le système de télécommunication primaire est le système DVB-T, une méthode de localisation spécifique pourra être utilisée.

Une première variante de ladite méthode de localisation exploite les signatures spectrales des différents émetteurs, comme décrit ci-après.

On envisage ici le cas où chaque émetteur DVB-T est caractérisé par un sous-ensemble de $\ell$ canaux qui lui sont attribués parmi $K$ canaux. Par exemple, en France la TNT (Télévision Numérique Terrestre) qui fonctionne selon la norme DVB-T, utilise les canaux UHF 21 à 69, chaque émetteur ne pouvant émettre que dans $\ell$=**6** canaux parmi les $K$ = **49** canaux UHF précités. La combinaison de ces $\ell$ canaux parmi $L$ constitue la signature spectrale de l'émetteur.

La méthode de localisation détecte les canaux UHF occupés pour identifier la signature spectrale de l'émetteur le plus proche. Pour ce faire, on détecte les canaux UHF occupés par des signaux DVB-T. Ces signaux utilisant une modulation OFDM *(Orthogonal Frequency Division Multiplexing)* de paramètres temporels bien définis, on utilisera avantageusement une méthode d'estimation de caractéristiques de signaux OFDM divulguée dans la demande de brevet français n° 07 55394 déposée le même jour par la demanderesse et incluse ici par référence.

Plus précisément, un signal OFDM $s_a$ reçu par le terminal peut s'exprimer, en faisant abstraction des multitrajets et après démodulation en bande de base, sous la forme:

$$s_a(t) = \frac{\sqrt{E}}{M} \sum_k g\big(t - k(M+D)T_c\big) e^{2i\pi\Delta f t} \cdot \sum_{m=0}^{M-1} a_{n+kM}\, e^{2i\pi \frac{m}{MT_c}(t - DT_c - k(M+D)T_c)}$$

$$(1)$$

où $E$ est la puissance du signal, $M$ est le nombre de porteuses du multiplex OFDM, $a_n$ sont les symboles d'information appartenant à un alphabet de modulation, QPSK, $1/T_c$ est le débit des symboles d'information, et D est la taille du préfixe cyclique exprimée en nombre de symboles d'information, $g(t)$ est une impulsion de mise en forme des symboles OFDM ayant un support temporel et $\Delta f$ est un résidu de porteuse dû à l'imperfection de la démodulation RF. Dans le cas des signaux DVB-T de la TNT, les paramètres temporels sont définis à savoir $M$=**8192, D=256**, $T_c$ =**1/8**$\mu$**s.**

La détection de la présence d'un signal OFDM est réalisée à partir du calcul de la fonction de discrimination $J(\alpha,\beta)$ **:**

$$J(\alpha,\beta) = \sum_{p=-P}^{P} \left| \frac{1}{U} \sum_{u=0}^{U-1} s(u)s^{*}(u-\alpha)e^{-2i\pi\frac{p}{\alpha+\beta}} \right|^{2} \qquad (2)$$

où $s(u)$, $u= 0,..,U$-1 est une séquence d'échantillons du signal reçu, obtenu après démodulation en bande de base et échantillonnage à la fréquence $\frac{1}{T_e} = \frac{1}{T_c}$. $UT_e$ est la longueur de la séquence échantillonnée, choisie de préférence entre **0.05s** et **0.1s** ; $P$ est un nombre entier tel que $P \geq 1$, par exemple $P=2$. Cette fonction de discrimination permet de détecter la présence d'un signal OFDM ayant les paramètres temporels $\alpha = M$ et $\beta = D$, la probabilité de présence d'un tel signal étant d'autant plus grande que la valeur de $J(\alpha,\beta)$ est plus élevée.

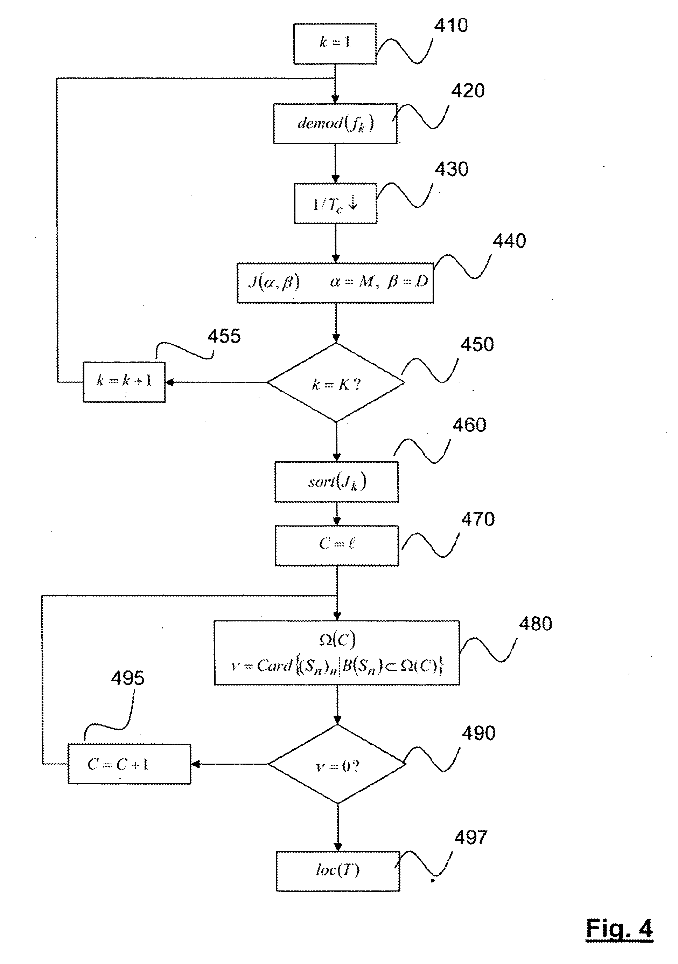

La Fig. 4 donne l'organigramme d'une méthode de localisation par identification de signature spectrale.

On initialise l'indice **k** de canal à 1 en 410 et pour chacun des canaux UHF $B_k$, $k = 1,..,K$ avec ici $K = 49$, on effectue la séquence d'étapes suivantes :

En 420, on démodule le signal à la fréquence centrale $f_k$ du canal pour le ramener en bande de base et on l'échantillonne en 430 à la fréquence symbole $1/T_c$.

On calcule à l'étape 440 la valeur de la fonction de discrimination pour les paramètres temporels $\alpha=M$ et $\beta=D$ précités.

On teste en 450 si **k=K**. Dans la négative on incrémente **k** en 455 et on retourne à l'étape 420. Dans l'affirmative, c'est-à-dire dès lors que les **K** canaux ont été testés, on trie en 460 les valeurs de $J(\alpha,\beta)$ obtenues pour les différents canaux, soit $J_k$, $k=1,..,K$.

En 470, on initialise un compteur C de canaux à $\ell$ et le nombre $\nu$ d'émetteurs ayant une signature spectrale incluse dans l'ensemble de ces C canaux à 0. On entre ensuite dans une boucle d'itération.

En 480, on détermine l'ensemble $\Omega(C)$ des C canaux $B_k$ correspondant aux C valeurs $J_k$ les plus élevées.

On recherche ensuite en 480 les émetteurs ayant leurs signatures spectrales (c'est-à-dire la totalité de leurs $\ell$ canaux alloués) comprises dans l'ensemble $\Omega(C)$. $\nu$ est égal au nombre de ces émetteurs.

On teste en 490 si la valeur de $\nu$ est nulle. Dans l'affirmative on incrémente C en 495 et l'on retourne à l'étape 470. Dans la négative, on a généralement $\nu = 1$ et on retient en 497 l'émetteur dont les six canaux appartiennent à $\Omega(C)$. On considère alors que le terminal est localisé dans la zone de couverture de $\Omega(C)$. Si **v>1,** cela signifie que le terminal est situé entre plusieurs émetteurs, autrement dit à l'intersection de plusieurs zones de couverture.

Cette méthode de localisation permet de connaître la position du terminal avec une précision de l'ordre du diamètre moyen des zones de couverture.

Une seconde variante de ladite méthode de localisation suppose que la base de données contienne une cartographie des canaux UHF utilisés sur le territoire d'intérêt. Plus précisément, ce territoire est divisé en zones élémentaires (par exemple des pavés) et à chaque zone élémentaire correspond un enregistrement dans la base de données. Cet enregistrement fournit, pour chacun des canaux de **B**, le niveau moyen de réception des signaux émis par le système primaire dans cette bande. Ainsi, à chaque zone $Z_i$, correspond une liste ordonnée de niveaux moyens de réception correspondants : $\Lambda_i = \{\lambda_i(b)|b \in B\}$ où $\lambda_i(b)$ est le niveau moyen de réception de la bande b dans la zone $Z_i$. Si aucun signal émis par le système n'est reçu dans la zone $Z_i$ dans la bande b, on choisira arbitrairement une valeur pour $\lambda_i(b)$ strictement inférieure au niveau minimal de détection du signal primaire. Par exemple, -15 dB sous le niveau de bruit.

Selon cette seconde variante de localisation, les moyens de localisation du terminal opportuniste déterminent dans un premier temps les canaux UHF dans lesquels celui-ci reçoit une puissance supérieure à un seuil donné, par exemple 10dB au dessus du niveau de bruit. On note $\Gamma=\{b_{k_1}...b_{k_p}\}$ le sous-ensemble de **B** constitué de ces canaux et $\Lambda = \{\mu(b_{k_1}),...,\mu(b_{k_p})\}$ la liste ordonnée des niveaux mesurés dans les bandes correspondantes.

Les moyens de localisation recherchent ensuite, parmi l'ensemble des zones $Z_i$ répertoriées dans la base de données, la zone $Z_{i0}$ telle que $\Lambda_i$ est la plus proche de A au sens d'une certaine distance.

Plus précisément, pour chaque zone $Z_i$ on détermine un scalaire $\rho_i$ tel que :

$$\varepsilon_i = \sum_{b\in\Gamma} (\mu(b) - \rho_i\lambda_i(b))^2 \qquad (3)$$

soit minimum. Soit $d_i = \varepsilon_i^{\min}$ ce minimum. La valeur $d_i$ représente en fait une distance entre $\Lambda_i$ et $\Lambda$. L'homme du métier comprendra que des distances autres que celle définie en (3) peuvent être envisagées.

On peut déterminer ensuite la zone $\mathbf{Z}_{i0}$ comme celle des zones $\mathbf{Z}_i$ qui réalise la plus faible distance $d_i$. Le terminal opportuniste sera alors supposé être localisé dans la zone $\mathbf{Z}_{i0}$.

Alternativement, on peut accepter une certaine marge d'erreur et sélectionner les zones $\mathbf{Z}_i$ telles que la distance $d_i$ est inférieure à un seuil de tolérance prédéterminé $d_{\min}$. Dans ce cas, le terminal opportuniste sera supposé être localisé dans la zone :

$$Z = \bigcup_{d_i < d_T} Z_i \qquad\qquad (4)$$

Selon une troisième variante, on combinera la première et la seconde variantes de la méthode de localisation. Plus précisément, on déterminera l'intersection :

$$Z \cap \pi\left(\Omega(C)\right) \qquad\qquad (5)$$

où $\mathbf{Z}$ est définie par l'expression (4) et $\pi(\Omega(\mathbf{C}))$ est la zone de couverture de l'émetteur dont les canaux sont donnés par $\Omega(\mathbf{C}),$ tel que défini précédemment.

Si, lors de la mise en oeuvre de cette troisième variante, on obtient une incompatibilité de localisation entre les première et seconde variantes, autrement dit si $\mathbf{Z} \cap \pi(\Omega(\mathbf{C})) = \varnothing$, on peut alors donner priorité à l'une ou à l'autre des deux variantes. Avantageusement, dans un tel cas de divergence, on optera pour la seconde variante de localisation en limitant le sous-ensemble $\Gamma = \{\boldsymbol{b}_{k_1}...\boldsymbol{b}_{k_p}\}$ à un nombre prédéterminé $\chi$ de canaux (par exemple $\chi\boldsymbol{=5})$ correspondant aux $\chi$ niveaux de réception mesurés les plus élevés de $\Lambda$.

## Revendications

1. Terminal de télécommunication opportuniste (300) destiné à coexister avec un système de télécommunication primaire utilisant un ensemble ($B$) de bandes de fréquence d'émission comprenant une pluralité d'émetteurs distribués spatialement, chaque émetteur étant adapté à émettre, dans une pluralité de bandes de fréquence dudit ensemble qui lui sont allouées, à l'intérieur d'une zone de couverture, ledit terminal étant **caractérisé en ce qu'**il comprend :

   - des moyens de localisation (310) adaptés à fournir la position dudit terminal avec une précision prédéterminée ;
   - une base de données (320) dans laquelle sont stockées pour chaque émetteur sa position, les bandes de fréquence qui lui sont allouées et des informations de couverture définissant sa zone de couverture ;
   - des moyens de calcul (330) adaptés à déterminer, pour chacune des bandes de fréquence dudit ensemble, la puissance maximale que le terminal peut y émettre, à partir de ladite position du terminal, ainsi que la position, les bandes de fréquences allouées et la zone de couverture de chaque émetteur, lesdits moyens de calcul étant en outre adaptés à trier les bandes de fréquence en fonction des puissances maximales ainsi obtenues;
   - des moyens d'émission/réception radio adaptés à détecter la présence d'un signal dans les bandes de fréquences ainsi triées, en commençant par la bande de fréquence associée à la puissance maximale la plus élevée.

2. Terminal de télécommunication opportuniste selon la revendication 1, **caractérisé en ce que** les moyens de calcul sont adaptés à déterminer, pour chaque bande de fréquence dudit ensemble, les émetteurs possédant ladite bande parmi leurs bandes de fréquence allouées, puis à déterminer, en fonction des informations de couverture de la base de données, les zones de couverture respectives de ces émetteurs, et à en déduire l'émetteur $\left(S_{n_0}^k\right)$ dont la zone de couverture $\left(Z_{n_0}^k\right)$ est la plus proche dudit terminal pour la bande considérée.

3. Terminal de télécommunication opportuniste selon la revendication 2, **caractérisé en ce que** les moyens de calcul sont adaptés à calculer, à partir d'un modèle de propagation, la puissance maximale $\left(P_{\max}^{k}\right)$ que le terminal peut émettre sans que l'intensité du champ généré au point de la zone de couverture le plus proche du terminal n'excède une valeur de seuil prédéterminée $\left(E_{\max}^{k}\right)$.

4. Terminal de télécommunication selon les revendications précédentes, **caractérisé en ce que** la présence d'un signal dans lesdites bandes triées est détectée par un détecteur de puissance.

5. Terminal de télécommunication opportuniste selon les revendications précédentes, **caractérisé en ce que** les moyens de localisation sont un récepteur GPS.

6. Terminal de télécommunication opportuniste selon les revendications 1 à 4, **caractérisé en ce que** lesdits moyens de localisation déterminent la position du terminal, avec la précision du diamètre moyen d'une zone de couverture, en fonction de la signature spectrale de l'émetteur le plus proche du terminal.

7. Terminal de télécommunication opportuniste selon la revendication 6, **caractérisé en ce que** le système de télécommunication primaire émettant des signaux OFDM de paramètres temporels prédéterminés dans les bandes de fréquence dudit ensemble, les moyens de localisation sont adaptés à déterminer la probabilité de présence d'un signal OFDM dans chacune des dites bandes et à les trier par ordre de probabilité décroissante pour obtenir une liste ordonnée de bandes.

8. Terminal de télécommunication opportuniste selon la revendication 7, **caractérisé en ce que** les paramètres temporels sont la durée utile et la longueur de préfixe cyclique d'un symbole OFDM et que la probabilité de présence d'un signal OFDM est estimée par la fonction de discrimination :

$$J(\alpha, \beta) = \sum_{p=-P}^{P} \left| \frac{1}{U} \sum_{u=0}^{U-1} s(u) s^*(u-\alpha) e^{-2i\pi \frac{p}{\alpha+\beta}} \right|^2$$

où $s(u)$, $u=0,..,U$-1 est une séquence d'échantillons du signal reçu par le terminal, obtenu après démodulation en bande de base et échantillonnage, $\alpha$ et $\beta$ sont respectivement la durée utile et la longueur de préfixe de symbole OFDM, exprimées en nombre d'échantillons.

9. Terminal de télécommunication opportuniste selon la revendication 8, **caractérisé en ce que** le système de télécommunication primaire étant un système de diffusion DVB-T, que six bandes de fréquence sont allouées par émetteur et que $P$ =3.

10. Terminal de télécommunication opportuniste selon l'une des revendications 7 à 9, **caractérisé en ce que** la position du terminal est donnée par l'émetteur dont toutes les bandes allouées sont les premières à apparaître dans ladite liste ordonnée.

11. Terminal de télécommunication opportuniste selon les revendications 1 à 4, **caractérisé en ce que** la base de données contient pour chaque zone élémentaire ($Z_i$) d'une pluralité de zones élémentaires d'un territoire donné, une liste ($\Lambda_i$) niveaux moyens de réception respectifs dans ces bandes, les moyens de localisation étant par ailleurs adaptés à mesurer les niveaux de réception dans les différentes bandes ($B$), à sélectionner celles dans lesquelles le niveau de réception est supérieur à un seuil donné, et à rechercher la zone ($Z_i$) dont la liste ($\Lambda_i$) des niveaux moyens de réception est la plus proche de celle ($\Lambda$) constituée de ceux mesurés dans les bandes ainsi sélectionnées, au sens d'une certaine distance.

12. Terminal de télécommunication opportuniste selon les revendications 1 à 4, **caractérisé en ce que** la base de données contient pour chaque zone élémentaire ($Z_i$) d'une pluralité de zones élémentaires d'un territoire donné, une liste ($\Lambda_i$) niveaux moyens de réception respectifs dans ces bandes, les moyens de localisation étant par ailleurs adaptés à mesurer les niveaux de réception dans les différentes bandes ($B$), à sélectionner celles dans lesquelles le niveau de réception est supérieur à un seuil donné, et à rechercher les zones ($Z_i$) dont la liste ($\Lambda_i$) des niveaux moyens de réception est voisine de celle ($\Lambda$) constituée de ceux mesurés dans les bandes ainsi sélectionnées, au sens d'une certaine distance inférieure à un seuil prédéterminé ($d_T$).

13. Terminal de télécommunication opportuniste selon la revendication 12, **caractérisé en ce que** les moyens de localisation localisent le terminal dans la zone $\left( Z = \bigcup_{d_i < d_T} Z_i \right)$ constituée par la réunion des zones élémentaires réalisant une distance inférieure au dit seuil prédéterminé.

14. Méthode de recherche de bande disponible pour un terminal destiné à coexister avec un système de télécommunication primaire utilisant un ensemble ($B$) de fréquences d'émission comprenant une pluralité d'émetteurs distribués spatialement, chaque émetteur étant adapté à émettre, dans une pluralité de bandes de fréquence dudit ensemble qui lui sont allouées, à l'intérieur d'une zone de couverture, ladite méthode étant **caractérisée en ce que** :

    - on obtient la position dudit terminal avec une précision prédéterminée ;
    - on détermine, pour chacune des bandes de fréquence dudit ensemble, la puissance maximale que le terminal peut y émettre, à partir de ladite position du terminal, ainsi que la position, les bandes de fréquences allouées et la zone de couverture de chaque émetteur ;
    - on trie les bandes de fréquence en fonction des puissances maximales ainsi obtenues ;
    - on détecte la présence d'un signal dans les bandes de fréquences ainsi triées, en commençant par la bande de fréquence associée à la puissance maximale la plus élevée.

15. Méthode de recherche de bande disponible selon la revendication 14, **caractérisée en ce que**, pour chaque bande de fréquence dudit ensemble, on détermine les émetteurs possédant ladite bande parmi leurs bandes de fréquence allouées, puis les zones de couverture respectives de ces émetteurs, et on en déduit l'émetteur $\left( S_{n_0}^k \right)$ dont la zone de couverture $\left( Z_{n_0}^k \right)$ est la plus proche dudit terminal pour la bande considérée.

16. Méthode de recherche de bande disponible selon la revendication 15, **caractérisée en ce que** l'on calcule à partir d'un modèle de propagation, la puissance maximale $\left( P_{\max}^k \right)$ que le terminal peut émettre sans que l'intensité du champ généré au point de la zone de couverture le plus proche du terminal n'excède une valeur de seuil prédéterminée $\left( E_{\max}^k \right)$.

17. Méthode de recherche de bande disponible selon l'une des revendications 14 à 16, **caractérisée en ce que** la présence d'un signal dans lesdites bandes triées est détectée par détection de puissance.

18. Méthode de localisation de recherche de bande disponible selon l'une des revendications 14 à 17, **caractérisée en ce que** la position du terminal est obtenue par un récepteur GPS.

19. Méthode de recherche de bande disponible selon l'une des revendications 14 à 17, **caractérisée en ce que** la position du terminal est obtenue, avec la précision du diamètre moyen d'une zone de couverture, en fonction de la signature spectrale de l'émetteur le plus proche du terminal.


**Claims**

1. Cognitive telecommunication terminal (300) designed to coexist with a primary telecommunication system using a set of transmission frequency bands ($B$) comprising a plurality of spatially distributed transmitters, each transmitter being adapted to transmit within a coverage area in a plurality of frequency bands in said set allocated to the transmitter, said terminal being **characterised in that** it comprises:

- positioning means (310) suitable for providing the position of said terminal with a predetermined precision;
- a database (320) in which the position, allocated frequency bands and coverage information defining the coverage area are stored for each transmitter;
- calculation means (330) suitable for determining the maximum power that the terminal can transmit for each frequency band in said set, starting from said terminal position, together with the position, allocated frequency bands and the coverage area for each transmitter, said calculation means also being suitable for sorting frequency bands as a function of the maximum powers thus obtained;
- radio transmission/reception means suitable for detecting the presence of a signal in the frequency bands thus sorted, beginning with the frequency band associated with the highest maximum power.

2. Cognitive telecommunication terminal according to claim 1, **characterised in that** the calculation means are adapted to determine, for each frequency band in said set, and the transmitters having said band among their allocated frequency bands, and then, as a function of the database coverage information, determining the coverage areas of each of these transmitters, and deducing the transmitter $(S_{n_0}^k)$ for which the coverage area $(Z_{n_0}^k)$ is closest to said terminal for the band considered.

3. Cognitive telecommunication terminal according to claim 2, **characterised in that** the calculation means are suitable for using a propagation model and calculating the maximum power $\left(P_{\max}^k\right)$ that the terminal can transmit without the field intensity generated at the point on the coverage area closest to the terminal exceeding a predetermined threshold value $\left(E_{\max}^k\right)$.

4. Telecommunication terminal according to the previous claims, **characterised in that** the presence of a signal in said sorted bands is detected by a power detector.

5. Cognitive telecommunication terminal according to the previous claims, **characterised in that** the positioning means are a GPS receiver.

6. Cognitive telecommunication terminal according to claims 1 to 4, **characterised in that** said positioning means determine the position of the terminal with a precision equal to the average diameter of a coverage area, as a function of the spectral signature of the closest transmitter to the terminal.

7. Cognitive telecommunication terminal according to claim 6, **characterised in that** the primary telecommunication system transmitting OFDM signals of predetermined time parameters in frequency bands of said set, the positioning means are adapted to determine the probability of the presence of an OFDM signal in each of said bands and to sort the bands in order of decreasing probability for obtaining an ordered list of bands.

8. Cognitive telecommunication terminal according to claim 7, **characterised in that** the time parameters are the useful duration and the cyclic prefix length of an OFDM symbol, and **in that** the probability of the presence of an OFDM signal is estimated by the discrimination function:

$$J(\alpha,\beta) = \sum_{p=-P}^{P} \left| \frac{1}{U} \sum_{u=0}^{U-1} s(u)s^*(u-\alpha)e^{-2i\pi\frac{p}{\alpha+\beta}} \right|^2$$

where $s(u)$, $u=0,..,U$-1 is a sequence of samples of the signal received by the terminal, obtained after demodulation in the base band and sampling, $\alpha$ and $\beta$ are the useful duration and the prefix length of an OFDM symbol respectively, expressed as a number of samples.

9.  Cognitive telecommunication terminal according to claim 8, **characterised in that** the primary telecommunication system is a DVB-T broadcasting system, and **in that** six frequency bands are allocated per transmitter and $P = 3$.

10. Cognitive telecommunication terminal according to one of claims 7 to 9, **characterised in that** the terminal position is given by the transmitter for which all allocated bands are the first to appear in said ordered list.

11. Cognitive telecommunication terminal according to claims 1 to 4, **characterised in that** for each elementary area ($Z_i$) in a plurality of elementary areas for a given region, the database contains a list ($\Lambda_i$) of corresponding average reception levels in these bands, the positioning means being also adapted to measure the reception levels in the various bands ($B$), to select bands in which the reception level is greater than a given threshold, and to search for the area ($Z_i$) for which the list ($\Lambda_i$) of average reception levels is closest to the list ($\Lambda$) formed of levels measured in the bands thus selected, by using a given distance.

12. Cognitive telecommunication terminal according to claims 1 to 4, **characterised in that** for each elementary area ($Z_i$) in a plurality of elementary areas for a given region, the database contains a list ($\Lambda_i$) of corresponding average reception levels in these bands, the positioning means being also adapted to measure the reception levels in the various bands ($B$), to select bands in which the reception level is greater than a given threshold, and to search for areas ($Z_i$) for which the list ($\Lambda_i$) of average reception levels is similar to the list ($\Lambda$) formed of levels measured in the bands thus selected, at a given distance less than a predetermined threshold ($d_T$).

13. Cognitive telecommunication terminal according to claim 12, **characterised in that** the positioning means position the terminal in the area $( Z = \bigcup_{d_i < d_T} Z_i )$ formed by the combination of elementary areas representing a distance less than said predetermined threshold.

14. Method of searching for available band for a terminal required to coexist with a primary telecommunication system using a set ($B$) of transmission frequencies comprising a plurality of spatially distributed transmitters, each transmitter being adapted to transmit within a coverage area in a plurality of frequency bands in said set and allocated to the transmitter, said method being **characterised in that**:

    - the position of said terminal is obtained with a predetermined precision;
    - the maximum power that the terminal can transmit for each frequency band in said set is determined, starting from said terminal position, together with the position, allocated frequency bands and coverage area for each transmitter;
    - frequency bands are sorted as a function of the maximum powers thus obtained;
    - the presence of a signal is detected in the frequency bands thus sorted, beginning with the frequency band associated with the highest maximum power.

15. Method of searching for available band according to claim 14, **characterised in that**, for each frequency band in said set, one determines transmitters having said band among their allocated frequency bands, and then the coverage areas of each of these transmitters, and one deduces the transmitter $(S_{n_0}^k)$ for which the coverage area $(Z_{n_0}^k)$ is closest to said terminal for the band considered.

16. Method of searching for available band according to claim 15, **characterised in that** it is used a propagation model and it is calculated the maximum power $\left(P_{\max}^k\right)$ that the terminal can transmit without the field intensity generated at the point on the coverage area closest to the terminal exceeding a predetermined threshold value $\left(E_{\max}^k\right)$.

17. Method of searching for available band according to one of claims 14 to 16, **characterised in that** the presence of a signal in said sorted bands is detected by a power detection.

18. Method of searching for available band according to one of claims 14 to 17, **characterised in that** the position of the terminal is obtained by a GPS receiver.

**19.** Method of searching for available band according to one of claims 14 to 17, **characterised in that** the position of the terminal is obtained with a precision equal to the average diameter of a coverage area, as a function of the spectral signature of the closest transmitter to the terminal.

**Patentansprüche**

**1.** Opportunistisches Telekommunikationsterminal (300), bestimmt zur Koexistenz mit einem eine Gruppe (*B*) von Sendefrequenzbändern benutzenden primären Telekommunikationssystem, eine Vielzahl räumlich verteilter Sender umfassend, wobei jeder Sender fähig ist, innerhalb eines Abdeckungsbereichs in einer Vielzahl ihm zugeteilter Frequenzbänder der genannten Gruppe zu senden und das genannte Terminal dabei **dadurch gekennzeichnet ist, dass** es umfasst:

- Ortungseinrichtungen (310), fähig die Position des genannten Terminals mit einer vorherbestimmten Genauigkeit zu liefern;
- eine Datenbank (320), in der für jeden Sender seine Position, die ihm zugeteilten Frequenzbänder und seinen Abdeckungsbereich definierende Abdeckungsinformationen gespeichert sind;
- Recheneinrichtungen (330), fähig für jedes der Frequenzbänder der genannten Gruppe die maximale Leistung, mit der das Terminal aufgrund der genannten Position des Terminals senden kann, sowie die Position, die zugeteilten Frequenzbänder und den Abdeckungsbereich jedes Senders zu bestimmen, wobei die genannten Recheneinrichtungen außerdem fähig sind, die Frequenzbänder in Abhängigkeit von den derart erhaltenen maximalen Leistungen zu sortieren;
- Funk-Sende-Empfangseinrichtungen, fähig, die Präsenz eines Signals in den derart sortierten Frequenzbändern zu detektieren, beginnend mit dem höchsten der maximalen Leistung zugeordneten Frequenzband.

**2.** Opportunistisches Telekommunikationsterminal nach Anspruch 1, **dadurch gekennzeichnet, dass** die Recheneinrichtungen fähig sind, für jedes Frequenzband der genannten Gruppe die Sender zu bestimmen, welche unter den ihnen zugeteilten Frequenzbändern das genannte Frequenzband besitzen, sodann in Abhängigkeit von den Abdeckungsinformationen der Datenbank die jeweiligen Abdeckungsbereiche dieser Sender zu bestimmen und davon den Sender $\left( S_{n_0}^k \right)$ abzuleiten, dessen Abdeckungsbereich $\left( Z_{n_0}^k \right)$ dem genannten Terminal am nächsten ist, für das betreffende Frequenzband.

**3.** Opportunistisches Telekommunikationsterminal nach Anspruch 2, **dadurch gekennzeichnet, dass** die Recheneinrichtungen fähig sind, aufgrund eines Fortpflanzungsmodells die maximale Leistung $\left( p_{max}^k \right)$ zu berechnen, die der Sender abstrahlen kann, ohne dass die Stärke des erzeugten Feldes in dem Punkt des Abdeckungsbereichs, der dem Terminal am nächsten ist, einen vorherbestimmten Schwellenwert $\left( E_{max}^k \right)$ überschreitet.

**4.** Telekommunikationsterminal nach den vorhergehenden Ansprüchen, **dadurch gekennzeichnet, dass** die Präsenz eines Signals in den genannten sortierten Bändern durch einen Leistungsdetektor detektiert wird.

**5.** Opportunistisches Telekommunikationsterminal nach den vorhergehenden Ansprüchen, **dadurch gekennzeichnet, dass** die Ortungseinrichtungen GPS-Empfänger sind.

**6.** Opportunistisches Telekommunikationsterminal nach den Ansprüchen 1 bis 4, **dadurch gekennzeichnet, dass** die Ortungseinrichtungen die Position des Terminals mit der dem mittleren Durchmesser eines Abdeckungsbereichs entsprechenden Genauigkeit in Abhängigkeit von der Spektralsignatur des Senders mit der größten Nähe zum Terminal bestimmen.

**7.** Opportunistisches Telekommunikationsterminal nach Anspruch 6, **dadurch gekennzeichnet, dass** - wobei das primäre Telekommunikationssystem in den Frequenzbändern der genannten Gruppe OFDM-Signale mit vorherbestimmten Zeitparametern sendet -, die Ortungseinrichtungen fähig sind, die Wahrscheinlichkeit der Präsenz eines OFDM-Signals in jedem der genannten Bänder zu bestimmen und sie gemäß einer absteigenden Wahrscheinlichkeitsreihenfolge zu sortieren, um eine Bänderordnungsliste zu erhalten.

8. Opportunistisches Telekommunikationsterminal nach Anspruch 7, **dadurch gekennzeichnet, dass** die Zeitparameter die Nutzdauer und die Länge des zyklischen Präfix eines OFDM-Symbols sind, und dass die Wahrscheinlichkeit der Präsenz eines OFDM-Signals bewertet wird durch die Diskriminationsfunktion:

$$J(\alpha,\beta) = \sum_{p=-P}^{P} |\frac{1}{U}\sum_{u=0}^{U-1} s(u)s*(u-\alpha)e^{-2i\pi\frac{p}{\alpha+\beta}} |^2$$

wo $s(u)$, $u=0,..,U$-1 eine Abtastwertesequenz des durch das Terminal empfangenen Signals ist, erhalten nach Basisbanddemodulation und Abtastung, und $\alpha$ und $\beta$ jeweils die Nutzdauer und die Präfixlänge des OFDM-Symbols sind, ausgedrückt in Anzahl Abtastwerte.

9. Opportunistisches Telekommunikationsterminal nach Anspruch 8, **dadurch gekennzeichnet, dass** das primäre Telekommunikationssystem ein DVB-T-Diffusionssystem ist, dass sechs Frequenzbänder pro Sender zugeteilt sind und dass P=3 ist.

10. Opportunistisches Telekommunikationsterminal nach einem der Ansprüche 7 bis 9, **dadurch gekennzeichnet, dass** die Position des Terminals durch den Sender gegeben ist bzw. angegeben wird, bei dem alle zugeteilten Bänder die ersten sind, die in der genannten Ordnungsliste erscheinen.

11. Opportunistisches Telekommunikationsterminal nach einem der Ansprüche 1 bis 4, **dadurch gekennzeichnet, dass** die Datenbank für jeden Elementarbereich ($Z_i$) einer Vielzahl Elementarbereiche eines bestimmten Gebiets eine Liste ($\Lambda_i$) der jeweiligen mittleren Empfangspegel in diesen Bändern enthält, wobei die Ortungseinrichtungen außerdem fähig sind, die Empfangspegel in den verschiedenen Bändern ($B$) zu messen, diejenigen zu selektieren, bei denen der Empfangspegel höher ist als ein bestimmter Pegel, und den Bereich ($Z_i$) zu suchen, dessen Liste ($\Lambda_i$) der mittleren Empfangspegel die größte Nähe zu derjenigen ($\Lambda$) hat, die durch die in den so selektierten Bändern gemessenen gebildet wird, im Sinne eines bestimmten Abstands.

12. Opportunistisches Telekommunikationsterminal nach einem der Ansprüche 1 bis 4, **dadurch gekennzeichnet, dass** die Datenbank für jeden Elementarbereich ($Z_i$) einer Vielzahl Elementarbereiche eines bestimmten Gebiets eine Liste ($\Lambda_i$) der jeweiligen mittleren Empfangspegel in diesen Bändern enthält, wobei die Ortungseinrichtungen außerdem fähig sind, die Empfangspegel in den verschiedenen Bändern ($B$) zu messen, diejenigen zu selektieren, bei denen der Empfangspegel höher ist als ein bestimmter Pegel, und den Bereich ($Z_i$) zu suchen, dessen Liste ($\Lambda_i$) der mittleren Empfangspegel derjenigen ($\Lambda$) benachbart ist, die durch die in den so selektierten Bändern gemessenen gebildet wird, im Sinne eines bestimmten Abstands, kleiner als ein vorherbestimmter Schwellenwert ($d_r$).

13. Opportunistisches Telekommunikationsterminal nach Anspruch 12, **dadurch gekennzeichnet, dass** die Ortungseinrichtungen das Terminal in dem Bereich, gebildet durch die Vereinigung der einen Abstand kleiner als der genannte vorherbestimmte Schwellenwert realisierenden Elementarbereiche $(Z = \bigcup_{d_i<d_r} Z_i)$ orten.

14. Verfahren zur Suche eines verfügbaren Frequenzbands für ein Terminal, bestimmt zur Koexistenz mit einem eine Gruppe ($B$) von Sendefrequenzbändern benutzenden primären Telekommunikationssystem, eine Vielzahl räumlich verteilter Sender umfassend, wobei jeder Sender fähig ist, innerhalb eines Abdeckungsbereichs in einer Vielzahl ihm zugeteilter Frequenzbänder der genannten Gruppe zu senden und das genannte Verfahren dabei **dadurch gekennzeichnet ist, dass**:

- man die Position des genannten Terminals mit einer vorherbestimmten Genauigkeit erhält;
- man für jedes der Frequenzbänder der genannten Gruppe die maximale Leistung, mit der das Terminal aufgrund der genannten Position des Terminals senden kann, sowie die Position, die zugeteilten Frequenzbänder und den Abdeckungsbereich jedes Senders bestimmt;
- man die Frequenzbänder in Abhängigkeit von den so erhaltenen maximalen Leistungen sortiert;
- man die Präsenz eines Signals in den derart sortierten Frequenzbändern detektiert, beginnend mit dem höchsten der maximalen Leistung zugeordneten Frequenzband.

15. Verfahren zur Suche eines verfügbaren Frequenzbands nach Anspruch 14, **dadurch gekennzeichnet, dass** man für jedes Frequenzband der genannten Gruppe die Sender bestimmt, welche unter den ihnen zugeteilten Frequenzbändern das genannte Frequenzband besitzen, sodann die jeweiligen Abdeckungsbereiche dieser Sender bestimmt, und man davon den Sender $\left( S_{n_0}^k \right)$ ableitet, dessen Abdeckungsbereich $\left( Z_{n_0}^k \right)$ dem genannten Terminal am nächsten ist, für das betreffende Frequenzband.

16. Verfahren zur Suche eines verfügbaren Frequenzbands nach Anspruch 15, **dadurch gekennzeichnet, dass** man aufgrund eines Fortpflanzungsmodells die maximale Leistung $\left( p_{max}^k \right)$ berechnet, die der Sender abstrahlen kann, ohne dass die Stärke des erzeugten Feldes in dem Punkt des Abdeckungsbereichs, der dem Terminal am nächsten ist, einen vorherbestimmten Schwellenwert $\left( E_{max}^k \right)$ überschreitet.

17. Verfahren zur Suche eines verfügbaren Frequenzbands nach einem der Ansprüche 14 bis 16, **dadurch gekennzeichnet, dass** die Präsenz eines Signals in den genannten sortierten Bändern durch einen Leistungsdetektor detektiert wird.

18. Verfahren zur Suche eines verfügbaren Frequenzbands nach einem der Ansprüche 14 bis 17, **dadurch gekennzeichnet, dass** man die Position des Terminals durch einen GPS-Empfänger erhält.

19. Verfahren zur Suche eines verfügbaren Frequenzbands nach einem der Ansprüche 14 bis 17, **dadurch gekennzeichnet, dass** man die Position des Terminals mit der dem mittleren Durchmesser eines Abdeckungsbereichs entsprechenden Genauigkeit in Abhängigkeit von der Spektralsignatur des Senders mit der größten Nähe zum Terminal erhält.

**Fig. 1**

**Fig. 2**

300

310

320

330

340

**Fig. 3**

$k = 1$ — 410

$demod(f_k)$ — 420

$1/T_c \downarrow$ — 430

$J(\alpha, \beta) \qquad \alpha = M, \; \beta = D$ — 440

455 — $k = k + 1$

$k = K\,?$ — 450

$sort(J_k)$ — 460

$C = \ell$ — 470

$\Omega(C)$
$v = Card\left\{(S_n)_n \middle| B(S_n) \subset \Omega(C)\right\}$ — 480

495 — $C = C + 1$

$v = 0\,?$ — 490

$loc(T)$ — 497

**Fig. 4**

# EP 1 998 469 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1750467 A

- FR 0755394

**Littérature non-brevet citée dans la description**

- **J. MITOLA.** Cognitive radio : an integrated agent architecture for software defined radio. *Royal Institute of Technology,* 08 Mai 2000

- **C. CORDEIRO et al.** IEEE 802.22 : an introduction to the first wireless standard base on cognitive radios. *Journal of Communications,* Avril 2006, vol. 1 (1), 38-47